# FASCICULE DE BREVET EUROPEEN

(11) **EP 3 507 110 B1**
(45) Date de publication et mention de la délivrance du brevet: **01.07.2020**
(21) Numéro de dépôt: 17764535.5
(22) Date de dépôt: 29.08.2017
(51) Int. Cl.: B60C 23/04

(54) **SYSTÈME DE LECTURE DE CAPTEURS DE SURVEILLANCE DE VÉHICULES AUTOMOBILES**
SYSTEM ZUM LESEN VON SENSOREN ZUR ÜBERWACHUNG VON KRAFTFAHRZEUGEN
SYSTEM FOR READING SENSORS FOR MONITORING AUTOMOTIVE VEHICLES

(30) Priorité: 31.08.2016 FR 1658087
(43) Date de publication de la demande: 10.07.2019
(73) Titulaire: Norauto France, 59262 Sainghin-en-Mélantois (FR)
(72) Inventeur: CAUBERGHS, Matthieu, 59235 Bersee (FR); MARCINKOWSKI, Jean-Luc, 60590 Boutencourt (FR)
(74) Mandataire: Decobert, Jean-Pascal
(86) Numéro de dépôt international: PCT/EP2017/071670
(87) Numéro de publication internationale: WO 2018/041835

(56) Documents cités:
- EP-A1- 2 727 751
- JP-A- 2008 100 613
- US-A1- 2006 055 519
- US-A1- 2013 282 231
- US-A1- 2015 239 305

## Description

### DOMAINE TECHNIQUE DE L'INVENTION

La présente invention concerne le domaine de la surveillance de véhicule en général, et plus particulièrement de la surveillance de l'état des pneus des véhicules, comme par exemple leur température, leur pression et le niveau de batterie de capteurs appelés TPMS de l'anglais « Tire Pression Monitoring System », par exemple.

### ETAT DE LA TECHNIQUE

A l'heure où les capteurs de mesures physiques deviennent de plus en plus petits et où les éléments du quotidien deviennent de plus en plus « intelligents », l'industrie automobile ne fait pas exception et en particulier pour des questions de sécurité.

En effet, depuis le 1 Novembre 2014, la réglementation européenne impose aux constructeurs automobiles d'équiper leurs véhicules d'un système de contrôle de la pression des pneus utilisant des capteurs TPMS. Cette décision a été prise afin d'améliorer la sécurité des usagers d'automobiles et de réaliser des économies de carburant en alertant le conducteur lorsque les pneus de son véhicule ne sont plus à la bonne pression.

Il existe deux types de système TPMS, l'un dit direct et l'autre dit indirect. Le TPMS direct repose sur un capteur électronique installé sur la roue et qui vérifie en permanence la pression du pneu et alerte ainsi en temps réel le conducteur en cas de baisse de pression. Le TPMS indirect repose lui sur un capteur installé sur la roue et qui mesure le différentiel de rotation entre les roues pour détecter une différence de pression. Ces deux systèmes visent le même objectif : informer l'utilisateur d'une baisse de pression d'au moins un des pneus de son véhicule.

Comme il est courant dans le domaine de l'industrie, chaque constructeur a mis au point son capteur de pression propriétaire répondant à des normes de communication, de fonctionnement et d'entretien spécifiques.

Ces capteurs dits capteurs de surveillance de la pression sont équipés d'un système de communication non filaire afin de transmettre leurs mesures à un système électronique, généralement l'ordinateur de bord du véhicule.

Depuis l'installation de ces capteurs de surveillance, les garages et entreprises d'entretien de véhicules se sont équipés de systèmes de lecture sans fil de ces capteurs de surveillance afin d'obtenir une lecture de l'état des pneus et du capteur et ainsi de pouvoir effectuer les réglages et l'entretien nécessaires du véhicule.

Toutefois, ces lecteurs généralement manuels doivent être disposés correctement par rapport aux types de capteurs de surveillance du véhicule et doivent également être capables de communiquer avec lesdits capteurs. Ainsi, il est courant que les garages propres à un constructeur automobile soient aptes à communiquer avec les véhicules de cette même marque mais soient inadaptés à la lecture de capteurs n'appartenant pas au constructeur.

Les utilisateurs sont donc contraints de trouver un garage adapté à leur véhicule et les garagistes de s'équiper d'une pluralité de lecteurs manuels et de connaître le type et le positionnement des capteurs de surveillance propres à chaque constructeur.

On connait du document US 2013/0282231 A1 une solution de détermination du type de capteur TPMS relativement à un code barre porté par le véhicule appelé VIN, de l'anglais « Vehicule Identification Number ». Néanmoins, ici encore la lecture de ce code barre nécessite une intervention humaine via l'utilisation d'un lecteur généralement portatif apte à être approché du véhicule afin d'en lire le code barre. Cette solution résout certaines problématiques précédemment discutées mais en présente de nouvelles comme une étape manuelle de lecture du VIN.

La publication brevet EP 2 727 751 - A1 décrit un système d'injection de véhicules à cadence élevée.

La présente invention vise à résoudre au moins en partie les différentes problématiques exposées ci-dessus.

### RESUME DE L'INVENTION

La présente invention concerne un banc de lecture d'au moins une donnée de surveillance configuré pour accueillir au moins un véhicule comportant au moins une roue comprenant au moins un pneu et au moins un capteur de surveillance étant configuré pour transmettre, par exemple sur demande et/ou de manière régulière et/ou évènementielle, ladite au moins une donnée de surveillance par ondes radio, ledit banc de lecture comprenant :
∘ au moins un capteur optique configuré pour acquérir au moins une image d'au moins une partie dudit au moins un véhicule, ledit au moins un capteur optique étant une caméra optique et ladite au moins une image d'au moins une partie dudit au moins un véhicule étant une image comprenant au moins un numéro d'immatriculation dudit au moins un véhicule ;
∘ au moins une unité de communication radio comportant au moins un dispositif antennaire apte à communiquer avec ledit au moins un capteur de surveillance ;
∘ au moins un module électronique en communication avec au moins une base de données, avec ledit au moins un capteur optique, et avec ladite au moins une unité de communication radio ;
et ledit au moins un module électronique étant configuré pour :
   ▪ recevoir dudit au moins un capteur optique ladite au moins une image ;
   ▪ extraire de ladite au moins une image au moins une information d'identification dudit au moins un véhicule ;
   ▪ transmettre au moins une requête en obtention d'au moins un paramètre de lecture avec ladite au moins une information d'identification à ladite au moins une base de données ;
   ▪ recevoir de ladite au moins une base de données au moins un paramètre de lecture relatif audit au moins un véhicule identifié par ladite au moins une base de données en réponse à ladite au moins une requête ;
   ▪ sélectionner un protocole de communication radio compatible avec ledit au moins un capteur de surveillance en fonction au moins dudit au moins un paramètre de lecture ;
   ▪ déterminer au moins un paramètre de fonctionnement additionnel à partir dudit au moins un paramètre de lecture, ledit au moins un paramètre de fonctionnement additionnel comprenant au moins un paramètre de communication radio comprenant au moins une puissance d'émission ;
   ▪ transmettre ledit au moins un protocole de communication radio, et de préférence ledit au moins un paramètre de fonctionnement additionnel, à ladite au moins une unité de communication radio de sorte à ce que ladite au moins une unité de communication radio soit apte à communiquer de manière compatible avec ledit au moins un capteur de surveillance par l'intermédiaire de ledit au moins un dispositif antennaire, ladite au moins une unité de communication radio étant configurée pour adapter la puissance d'émission radio lorsque ladite unité de communication radio envoie au moins une demande de ladite au moins une donnée de surveillance audit moins un capteur de surveillance par l'intermédiaire dudit au moins un dispositif antennaire ;
   ▪ recevoir depuis ladite au moins une unité de communication radio au moins une donnée de surveillance envoyée depuis ledit au moins un capteur de surveillance et reçue par ledit au moins un dispositif antennaire.

La présente invention permet la lecture rapide des capteurs de surveillance d'un véhicule, et particulièrement des capteurs de pression de type TPMS des pneus et cela indépendamment du type de capteurs ou de la marque du véhicule.

En effet, la présente invention assure une détection automatique du protocole de communication et de ses paramètres afin de lire le plus rapidement possible les informations des capteurs de surveillance.

La présente invention bénéficie de la technologie de la reconnaissance visuelle afin d'identifier le modèle du véhicule et d'adapter son système de lecture à ce modèle.

De manière très avantageuse, cette reconnaissance visuelle peut être réalisée à grande distance, et par exemple avant même que le véhicule ne pénètre dans le banc de lecture. Cela permet ainsi d'adapter le banc de lecture au véhicule considéré avant même que celui-ci ne soit à l'arrêt.

De plus, contrairement aux VIN qui peuvent se trouver à différents endroits en fonction du type ou de la marque du véhicule, la plaque d'immatriculation est toujours située aux deux même endroits, il est donc possible de disposer d'un capteur optique fixe pour capturer une image de la plaque d'immatriculation du véhicule et non d'un scanner mobile porté par un opérateur dans le cas du VIN par exemple.

Cela permet également, à partir de la plaque d'immatriculation du véhicule et d'au moins une base de données d'adapter de manière rapide, automatique et sans action d'un opérateur la présente invention selon un protocole de communication propre au véhicule considéré.

Cette adaptation peut être électronique dans le choix des paramètres de communication radio adéquates par exemple. Le banc de lecture est ainsi configuré pour s'adapter à des paramètres de communication radio comme par exemple la fréquence, la puissance ou encore la modulation des communications radio avec le ou les capteurs de surveillance.

En effet, la présente invention permet d'adapter le banc de lecture et particulièrement l'unité de communication radio selon le ou les protocoles de communication requis pour communiquer avec le ou les capteurs de surveillance du véhicule. Cette adaptation se fait en ajustant les règles de communication, le langage de communication ou encore l'ordonnancement des flux de données par exemple.

De manière avantageuse, l'unité de communication radio est configurée pour adapter sa puissance d'émission radio, cette adaptation pouvant être fonction d'un ou de plusieurs paramètres comme par exemple un modèle de véhicule, un positionnement du véhicule relativement au dispositif antennaire, le protocole de communication, le type de capteur de surveillance, les dimension internes et/ou externes des pneumatiques du véhicule, ...etc....

Ainsi, la présente invention permet par exemple d'augmenter la puissance d'émission de l'unité de communication radio afin d'être en mesure de communiquer avec un capteur de surveillance étant disposé par exemple en un lieu du véhicule plus éloigné relativement à un autre véhicule, ou en un lieu présentant des propriétés électromagnétiques plus absorbantes ou réfléchissantes relativement à un autre véhicule.

Par exemple, dans le cas d'un capteur de pression de type TPMS des pneus, certains pneus présentent des diamètres et/ou des épaisseurs plus ou moins variables. La présente invention permet l'adaptation du banc de lecture à ce genre de situation en permettant l'adaptation par exemple en puissance de l'unité de communication radio afin d'atteindre un capteur TPMS, cette adaptation étant de préférence possible via la lecture de la plaque d'immatriculation du véhicule et son identification dans une ou plusieurs bases de données.

Il est également avantageux que la puissance d'émission soit automatiquement adaptée afin d'une part de réaliser des économies en consommation énergétique et d'autre part de ne pas générer de pollution électromagnétique relativement à divers appareils voire relativement aux opérateurs.

Ainsi, à l'aide d'une ou plusieurs bases de données (base de données des caractéristiques véhicules et base de données des préconisations des pressions pneumatiques constructeurs, par exemple), la présente invention permet d'adapter son banc de lecture au type et au modèle de véhicule s'y trouvant.

D'un point de vue mécanique, la présente invention permet une réorganisation des antennes radio du banc de lecture afin d'optimiser au mieux les interactions électromagnétiques entre l'unité de communication radio et les capteurs de surveillance.

La présente invention peut donc permettre d'induire une adaptation mécanique du banc de lecture par déplacement des antennes radio le composant de sorte à permettre la mise en communication radio entre les capteurs et l'unité de communication radio.

La présente invention permet donc de manière très avantageuse la reconfiguration électronique et/ou informatique et/ou mécanique du banc de lecture afin de lire les informations de surveillance détenues par les capteurs de surveillance.

La présente invention concerne aussi un système de lecture d'au moins une donnée de surveillance comprenant au moins un véhicule comportant au moins une roue comprenant au moins un pneu et au moins un capteur de surveillance, ledit capteur de surveillance étant configuré pour transmettre, par exemple sur demande et/ou de manière régulière et/ou évènementielle, ladite au moins une donnée de surveillance par ondes radio, ledit système comprenant au moins un banc de lecture de ladite au moins une donnée de surveillance selon la présente invention.

La présente invention concerne également un procédé de lecture d'au moins une donnée de surveillance d'au moins un véhicule comportant au moins une roue comprenant au moins un pneu et au moins un capteur de surveillance étant configuré pour transmettre, par exemple sur demande et/ou de manière régulière et/ou évènementielle, ladite au moins une donnée de surveillance par ondes radio, ladite lecture étant réalisée depuis au moins un banc de lecture selon la présente invention, ledit au moins un banc de lecture étant configuré pour accueillir ledit au moins un véhicule et comprenant :
∘ au moins un capteur optique configuré pour acquérir au moins une image d'au moins une partie dudit au moins un véhicule, ledit au moins un capteur optique étant une caméra optique et ladite au moins une image d'au moins une partie dudit au moins un véhicule étant une image comprenant au moins un numéro d'immatriculation dudit au moins un véhicule ;
∘ au moins une unité de communication radio comportant au moins un dispositif antennaire apte à communiquer avec ledit au moins un capteur de surveillance ;
∘ au moins un module électronique en communication avec au moins une base de données, avec ledit au moins un capteur optique, et avec ladite au moins une unité de communication radio ;
ledit procédé de lecture comprenant au moins les étapes suivantes :
▪ recevoir par ledit au moins un module électronique depuis ledit au moins un capteur optique ladite au moins une image ;
▪ extraire de ladite au moins une image au moins une information d'identification dudit au moins un véhicule ;
▪ transmettre depuis ledit au moins un module électronique au moins une requête en obtention d'au moins un paramètre de lecture avec ladite au moins une information d'identification à ladite au moins une base de données ;
▪ recevoir par ledit au moins un module électronique depuis ladite au moins une base de données au moins un paramètre de lecture relatif audit au moins un véhicule identifié par ladite au moins une base de données en réponse à ladite au moins une requête ;
▪ sélectionner un protocole de communication radio compatible avec ledit au moins un capteur de surveillance en fonction au moins dudit au moins un paramètre de lecture ;
▪ déterminer au moins un paramètre de fonctionnement additionnel à partir dudit au moins un paramètre de lecture, ledit au moins un paramètre de fonctionnement additionnel comprenant au moins un paramètre de communication radio comprenant au moins une puissance d'émission ;
▪ transmettre depuis ledit au moins un module électronique ledit au moins un protocole de communication, et de préférence ledit au moins un paramètre de fonctionnement additionnel, vers ladite au moins une unité de communication radio de sorte à ce que ladite au moins une unité de communication radio soit apte à communiquer de manière compatible avec ledit au moins un capteur de surveillance par l'intermédiaire dudit au moins un dispositif antennaire ;
▪ configurer ladite au moins une unité de communication radio pour adapter la puissance d'émission radio lorsque ladite unité de communication radio envoie au moins une demande de ladite au moins une donnée de surveillance audit moins un capteur de surveillance par l'intermédiaire dudit au moins un dispositif antennaire ;
▪ recevoir par ledit au moins un module électronique depuis ladite au moins une unité de communication radio au moins une donnée de surveillance envoyée par ledit au moins un capteur de surveillance et reçue par ledit au moins un dispositif antennaire.

### BREVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :

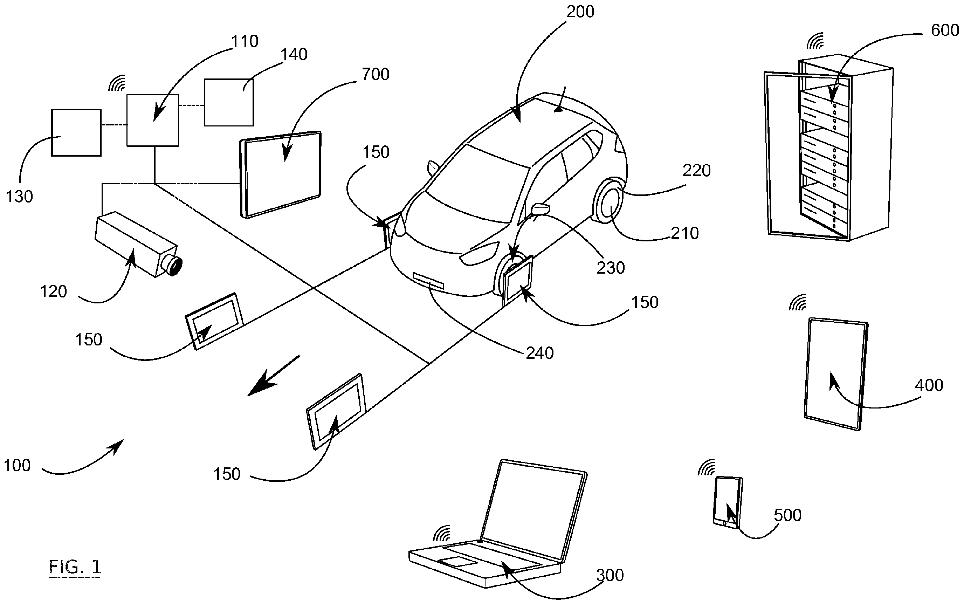

- La figure 1 illustre, selon un mode de réalisation de la présente invention, un banc de lecture configuré pour lire les données de surveillance des capteurs TPMS d'un véhicule.

Les dessins joints sont donnés à titre d'exemples et ne sont pas limitatifs de l'invention. Ces dessins sont des représentations schématiques et ne sont pas nécessairement à l'échelle de l'application pratique.

### DESCRIPTION DETAILLEE DE L'INVENTION

Dans le cadre de la présente invention, le terme « protocole de communication » ou ses équivalents ont pour définition les règles de communication entre deux dispositifs, et/ou divers paramètres comme par exemple un ordonnancement des flux de données, un format de données, une clef de cryptage, un langage de communication. Il s'agit des paramètres permettant la compréhension des données échangées entre chacun des dispositifs.

Dans le cadre de la présente invention, le terme « paramètres physiques de communication » ou ses équivalents ont pour définition au moins un paramètre définissant la position relative d'au moins un dispositif antennaire relativement à au moins un capteur de surveillance, c'est-à-dire une position relative entre un dispositif antennaire, comme une antenne radio par exemple, relativement au capteur de surveillance ou à la roue du véhicule, il peut également s'agir de paramètres intrinsèques au véhicule comme par exemple sa voie ou son empattement. Ces paramètres ont pour objectif de permettre au banc de lecture de s'adapter mécaniquement au véhicule considéré en ajustant les dispositifs antennaires afin de satisfaire à ces paramètres physiques de communication.

Dans le cadre de la présente invention, le terme « paramètres de communication radio » ou ses équivalents ont pour définition des paramètres comme la fréquence, la puissance ou encore la modulation de signaux radio.

Dans le cadre de la présente invention, les termes « communication », « communiquer » ou leurs équivalents comprennent des communications unilatérales ou de préférence bilatérales. Ainsi une unité de communication apte à communiquer avec un capteur de surveillance signifie que l'unité de communication radio est apte à transmettre une demande de données de surveillance audit capteur de surveillance et également à recevoir lesdites données de surveillance depuis le capteur de surveillance et cela indépendamment de toute demande de données de surveillance si cette demande n'est pas nécessaire à l'obtention desdites données de surveillance.

Dans le cadre de la présente invention, le terme « état d'un pneu » ou ses équivalents ont pour définition au moins un paramètre de la roue notamment pris parmi : pression du pneu, température du pneu, niveau de batterie du capteur TPMS, niveau de dégradation du pneu, niveau de dégradation du capteur TPMS, et plus généralement tout paramètre pouvant indiquer un état physique, mécanique et/ou chimique de la roue, du pneu associé à ladite roue et du capteur TPMS associé audit pneu.

Dans le cadre de la présente invention, une base de données peut être locale et/ou déportée et être unitaire ou non. Ainsi, sauf mention contraire, une base de données peut comprendre une ou plusieurs bases de données locales et/ou déportées, réelles et/ou virtuelles. Par ailleurs, au sens de la présente invention, le terme base de données peut inclure diverses bases de données telles que : base de données des caractéristiques véhicules, base de données des protocoles de communication véhicules et base de données des préconisations des pressions pneumatiques constructeurs, par exemple.

Dans le cadre de la présente invention, les termes « un » ou « une » signifient « au moins » par défaut, à moins qu'il n'en soit disposé explicitement autrement.

Avant d'entamer une revue détaillée de modes de réalisation de l'invention, sont énoncées ci-après des caractéristiques optionnelles qui peuvent éventuellement être utilisées en association ou alternativement :
- Après transmission par ledit au moins un module électronique à ladite au moins une unité de communication radio dudit au moins un protocole de communication radio, ladite au moins une unité de communication radio est apte à envoyer au moins une demande de ladite au moins une donnée de surveillance de manière compatible avec ledit au moins un capteur de surveillance par l'intermédiaire dudit au moins un dispositif antennaire.
- Après transmission par ledit au moins un module électronique à ladite au moins une unité de communication radio dudit au moins un protocole de communication radio, ladite au moins une unité de communication radio est apte à recevoir au moins ladite au moins une donnée de surveillance de manière compatible avec ledit au moins un capteur de surveillance par l'intermédiaire dudit au moins un dispositif antennaire.
- Ledit au moins un module électronique est configuré pour déterminer au moins un paramètre de fonctionnement additionnel à partir dudit au moins un paramètre de lecture.
- Ledit au moins un paramètre de fonctionnement additionnel comprend au moins l'un parmi : au moins un paramètre physique de communication, au moins un paramètre de communication radio.
- Ledit au moins un paramètre physique de communication comprend au moins un paramètre pris parmi au moins : une distance relative et/ou une position relative entre ledit au moins un dispositif antennaire et ledit au moins un capteur de surveillance, une orientation dudit au moins un dispositif antennaire relativement audit au moins un pneu, un positionnement dudit au moins un capteur de surveillance relativement audit au moins un pneu, la voie dudit au moins un véhicule, l'empattement dudit au moins un véhicule.
   Cela permet d'adapter mécaniquement le banc de lecture afin d'optimiser au mieux la communication radio entre l'unité de communication radio et le capteur de surveillance.
- Ledit au moins un paramètre de communication radio comprend au moins l'un parmi : une fréquence, une modulation, une puissance.
- Ledit au moins un capteur de surveillance comprend au moins une source d'alimentation électrique, et est configuré pour mesurer au moins une donnée de surveillance prise parmi au moins : pression pneumatique dudit au moins un pneu, température dudit au moins un pneu, niveau de charge électrique de ladite au moins une source d'alimentation électrique, de préférence toute information relative à l'état de fonctionnement dudit au moins un pneu.

Cela permet de contrôler les pneumatiques du véhicule.
- Ledit au moins un capteur de surveillance est monté sur ladite au moins une roue.
   Cela permet de contrôler la pression des pneus du véhicule.
- Ledit au moins un capteur de surveillance est monté dans ledit au moins un pneu.
- Ledit au moins un capteur de surveillance est monté sur ledit au moins un pneu.
- Ledit au moins un capteur de surveillance comprend au moins une batterie d'alimentation électrique et ledit au moins un capteur de surveillance mesure au moins le niveau de charge électrique de ladite au moins une batterie d'alimentation électrique.
   Cela permet de déterminer si le capteur de surveillance doit être changé ou non.
- Ledit au moins un paramètre de lecture comprend au moins l'un parmi :
   au moins un protocole de communication, au moins une donnée technique relative audit au moins un véhicule.
- Selon un mode de réalisation, ledit au moins un protocole de communication comprend au moins un paramètre pris parmi au moins :
   une règle de communication, un ordonnancement des flux de données, un format de données, une clef de cryptage, un langage de communication.
   Cela permet d'adapter l'unité de communication radio au protocole de communication radio des différents capteurs de surveillance de sorte que le banc de lecture soit adaptable à un grand nombre de capteurs de surveillance différents, voire à tous.
- Ladite au moins une unité de communication radio est configurée pour adapter sa puissance d'émission radio en fonction dudit au moins un protocole de communication.
- Ladite au moins une unité de communication radio est configurée pour adapter la puissance d'émission radio lorsque ladite unité de communication radio envoie ladite au moins une demande de ladite au moins une donnée de surveillance audit moins un capteur de surveillance par l'intermédiaire dudit au moins un dispositif antennaire.
- Ladite au moins une donnée technique comprend au moins une donnée prise parmi au moins : carrosserie, marque, modèle, version, cylindrée, puissance chevaux, énergie, année, pression préconisée des pneus, numéro de série (Numéro d'identification du véhicule ou VIN selon l'anglais « Vehicle Identification Number »).
   Cela permet d'adapter le banc de lecture au véhicule et de connaître les besoins du véhicule afin d'effectuer au mieux sa maintenance.
- Ledit au moins un banc de lecture est configuré pour accueillir ledit au moins un véhicule à l'arrêt et/ou en mouvement.
   Cela permet de contrôler les pneus du véhicule qu'il soit à l'arrêt au niveau du banc de lecture ou bien en train de le traverser. Dans ce dernier cas, la présente invention permet la lecture dans un temps très bref d'une pluralité de capteurs de surveillance appartenant à une pluralité de véhicules sans que ceux-ci ne doivent s'arrêter.
- Selon un mode de réalisation, ledit au moins un banc de lecture est configuré pour accueillir au moins deux véhicules, de préférence au moins trois véhicules, et avantageusement au moins 4 véhicules simultanément.
   Cela permet de contrôler les pneumatiques d'une pluralité de véhicules simultanément.
- Ledit au moins un dispositif antennaire est un dispositif antennaire mobile configurée pour être déplacé à portée de communication radio avec ledit au moins un capteur de surveillance.
   Cela permet d'adapter le banc de lecture aux différents types de véhicules et de capteurs de surveillance.
- Ledit au moins un dispositif antennaire est configuré pour être déplacé en translation selon au moins une direction spatiale et/ou pour être déplacé par rotation relativement à au moins une direction spatiale. Cela permet d'adapter le banc de lecture mécaniquement aux différents capteurs de surveillance et aux différents véhicules.
- Ledit au moins un dispositif antennaire est configuré pour pouvoir être rapproché et éloigné de ladite au moins une roue dudit au moins un véhicule.
   Cela permet d'adapter le banc de lecture mécaniquement aux différents capteurs de surveillance et aux différents véhicules.
- Ledit au moins un dispositif antennaire est configuré pour être déplacé par rapport audit au moins un véhicule en fonction dudit au moins un paramètre de lecture.
   Cela permet d'adapter le banc de lecture mécaniquement aux différents capteurs de surveillance et aux différents véhicules.
- Selon un mode de réalisation, le banc de lecture comprend au moins un dispositif de mesure physique configuré pour déterminer au moins un paramètre physique de communication pris parmi au moins : une distance relative et/ou une position relative entre ledit au moins un dispositif antennaire et ladite au moins une roue, une orientation dudit au moins un dispositif antennaire relativement audit au moins un pneu, la voie dudit au moins un véhicule, l'empattement dudit au moins un véhicule.
- Selon un mode de réalisation, ledit banc de lecture est configuré pour permettre la communication radio entre ladite au moins une unité de communication radio et au moins deux capteurs de surveillance associés à deux roues distinctes dudit au moins un véhicule, avantageusement au moins quatre capteurs de surveillance associés à quatre roues distinctes dudit au moins un véhicule.
- Ledit banc de lecture comprend de préférence au moins deux dispositifs antennaires et avantageusement au moins quatre dispositifs antennaires, et chaque dispositif antennaire est disposé selon un plan vertical et/ou horizontal et de préférence au regard d'au moins une roue dudit au moins un véhicule, et est configuré pour communiquer avec au moins un capteur de surveillance différent.
   Cela permet de contrôler une pluralité de pneus simultanément.
- Ledit au moins dispositif antennaire comprend au moins une antenne radio.
- Ledit au moins dispositif antennaire comprend au moins une première antenne radio et au moins une deuxième antenne radio pour chaque roue dudit au moins un véhicule et ladite première antenne radio est disposée selon un plan vertical et ladite au moins une deuxième antenne radio est disposée selon un plan horizontal.
   Cela permet de lire des capteurs de surveillance nécessitant une antenne verticale et des capteurs de surveillance configurés pour des antennes radio horizontale avec le même banc de lecture sans modifier de manière importante sa configuration.
- Ledit au moins un capteur optique est une caméra optique et ladite au moins une image d'une partie au moins dudit au moins un véhicule est une image comprenant au moins un numéro d'immatriculation dudit au moins un véhicule.
   Cela permet de prendre une photo du véhicule et de préférence de sa plaque d'immatriculation afin d'identifier le modèle du véhicule à partir d'une base de données.
- Ledit au moins une module électronique comprend au moins un module photographique configuré pour extraire ledit au moins un numéro d'immatriculation à partir de ladite au moins une image.
- Ladite au moins une base de données comprend au moins une donnée technique associée audit au moins un numéro d'immatriculation dudit au moins un véhicule.
   Cela permet de connaître les besoins du véhicule afin d'effectuer au mieux sa maintenance.
- Selon un mode de réalisation, ladite au moins une base de données comprend au moins une première base de données et au moins une deuxième base de données, chacune pouvant être locale ou bien déportée, ladite au moins une première base de données comprenant au moins une donnée technique relative audit au moins un véhicule identifiable à partir de ladite au moins une information d'identification, la deuxième base de données comprenant au moins un protocole de communication associé à ladite au moins une donnée technique, de préférence ladite au moins une deuxième base de données transmettant, par exemple au module électronique, ledit au moins un protocole de communication.
- Ledit au moins un banc de lecture comprend au moins un dispositif d'affichage de ladite au moins une donnée de surveillance.
   Cela permet d'afficher les informations de surveillance à destination du conducteur ou des personnes travaillant au niveau du banc de lecture.
- Ledit au moins un module électronique est en communication avec :
   ∘ ladite au moins une base de données ;
   ∘ ledit au moins un capteur optique ;
   ∘ ladite au moins une unité de communication radio ;
   ∘ de préférence au moins un dispositif d'affichage de ladite au moins une donnée de surveillance ;
   ∘ de préférence au moins un dispositif de contrôle dudit au moins un module électronique ;
   ∘ de préférence au moins un dispositif de communication ;
   ∘ de préférence au moins un serveur informatique.
   Cela permet une forte interactivité entre le banc de lecture et une pluralité d'acteurs et de système afin d'optimiser au mieux la gestion et
   la maintenance du véhicule.
- Selon un mode de réalisation, ledit au moins un capteur de surveillance comprend une batterie d'alimentation électrique.
- Ledit au moins un capteur de surveillance comprend au moins une antenne, et est configuré pour être télé-alimenté par au moins une onde électromagnétique énergisante reçue par ladite au moins une antenne dudit au moins un capteur de surveillance.
- Ledit au moins un capteur de surveillance comprend au moins une antenne radio.
   Cela permet de communiquer de manière non filaire avec le capteur de surveillance. Et cela permet également de télé-alimenter le capteur de surveillance par une onde radio d'énergisation.
- Ledit au moins un capteur de surveillance comprend au moins une antenne radio formée par ladite au moins une roue.
   Cela permet d'utiliser les propriétés électromagnétiques des matériaux composant la roue afin de disposer d'une antenne ayant une très grande surface de réception radio.
- Selon un mode de réalisation de la présente invention, le banc de lecture comprend au moins un premier capteur optique et au moins un deuxième capteur optique, ledit au moins un premier capteur optique étant configuré pour acquérir au moins une image d'au moins une partie avant dudit au moins un véhicule, ledit au moins un deuxième capteur optique étant configuré pour acquérir au moins une image d'au moins une partie arrière dudit au moins un véhicule, ledit au moins un premier capteur optique étant de préférence une caméra optique et ladite au moins une image d'au moins une partie avant dudit au moins un véhicule étant de préférence une image comprenant au moins un numéro d'immatriculation dudit au moins un véhicule, ledit au moins un deuxième capteur optique étant de préférence une caméra optique et ladite au moins une image d'au moins une partie arrière dudit au moins un véhicule étant de préférence une image comprenant au moins un numéro d'immatriculation dudit au moins un véhicule.
   Cela permet d'accroitre l'efficacité du banc de lecture selon la présente invention ainsi que son autonomie. En effet, dans le cas où la plaque d'immatriculation avant n'est pas visible, la présente invention peut utiliser la plaque d'immatriculation arrière du véhicule pour obtenir les informations nécessaires à la détermination du protocole de communication. Et dans le cas où les plaques d'immatriculation avant et arrière ne sont que partiellement visibles, la présente invention peut combiner les images de la plaque d'immatriculation avant et de la plaque d'immatriculation arrière de sorte à extraire, voire extrapoler, le numéro d'immatriculation du véhicule, cette extrapolation pouvant également être complété d'autre informations visuelles obtenues par les capteurs optiques comme par exemple la marque, le modèle, la couleur du véhicule afin d'affiner la détermination de son numéro de plaque d'immatriculation dans le cas où celui-ci ne serait pas visible dans son intégralité tout en combinant les images des plaque d'immatriculation avant et arrière.
- Ledit au moins une module électronique comprend un module photographique configuré pour extraire ledit au moins un numéro d'immatriculation à partir d'une combinaison de ladite au moins une image d'au moins une partie avant dudit au moins un véhicule et ladite au moins une image d'au moins une partie arrière dudit au moins un véhicule.
   Cela permet dans le cas où les plaques d'immatriculation avant et arrière ne sont que partiellement visibles, de combiner les images de la plaque d'immatriculation avant et de la plaque d'immatriculation arrière de sorte à extraire, voire extrapoler, le numéro d'immatriculation du véhicule. De préférence, cette extrapolation peut également être complétée d'autre informations visuelles obtenues par les capteurs optiques comme par exemple la marque, le modèle, la couleur du véhicule afin d'affiner la détermination de son numéro d'immatriculation dans le cas où celui-ci ne serait pas visible dans son intégralité en combinant les images des plaques d'immatriculation avant et arrière

La présente invention trouve pour domaine d'application la maintenance, le contrôle et l'entretien de véhicule automobile comprenant au moins un capteur de surveillance.

De manière préférentielle, la présente invention s'applique particulièrement à la lecture des données de capteurs de pression de pneus appelés également capteurs TPMS.

Ces capteurs sont désormais obligatoires dans certains territoires du monde mais ne sont pas tous identiques. En effet, comme pour de nombreux autres dispositifs, les constructeurs automobiles ainsi que les fabricants de pneus ou simplement de capteurs TPMS ont développé des capteurs propriétaires ou des protocoles de communication propriétaires. De plus, les caractéristiques physiques de chaque véhicule étant parfois différentes d'un modèle à un autre, des différences de positionnement des capteurs TPMS existent d'un véhicule à un autre. En effet, la voie et/ou l'empattement d'un véhicule pouvant être différents entre plusieurs véhicules, les distances relatives entre chaque pneu d'un véhicule donné ne sont pas nécessairement les mêmes que pour un autre véhicule.

Ces capteurs TPMS disposent généralement de moyens de mesure de la pression d'un pneu, de sa température, et comprennent des moyens de communication radio afin de transmettre leurs mesures sous forme de données de surveillance à des systèmes de communication radio.

Certains capteurs TPMS disposent d'une source d'énergie de type batterie, quand d'autres utilisent des ondes électromagnétiques énergisantes émises par les systèmes de communication radio, à l'image des transpondeurs RFID dits passifs.

Lorsque les capteurs disposent d'une batterie, ils sont généralement configurés pour transmettre, en plus des autres données de température et pressions par exemple, le niveau de charge de leur batterie sous forme de données de surveillance à des systèmes de communication radio, cela permettant alors leur entretien et le remplacement de la batterie ou du capteur TPMS lui-même au besoin.

Il doit être précisé qu'un capteur de surveillance dit TPMS peut être configuré pour émettre de manière régulière, ou en fonction d'un événement, les données de surveillance qu'il mesure et cela préférentiellement par ondes radio. Dans certains cas, les capteurs TPMS émettent ces données de surveillance à fréquence temporelle régulière, par exemple toutes les secondes, minutes, heures, etc... Dans d'autres cas les capteurs TPMS sont configurés pour émettre les données de surveillance en fonction du nombre de tours de roue, d'une distance parcourue ou selon un seuil prédéterminé de temps, de pression ou de température relativement au pneu considéré, ou selon un niveau de batterie lorsque le capteur TPMS en comprend une.

Enfin, généralement les capteurs TPMS peuvent émettre ces données de surveillance à réception d'une demande compatible faite par un système de lecture disposant du protocole de communication correspondant au capteur TPMS considéré. La présente invention s'applique à tous types de capteurs de surveillance, et particulièrement de capteurs TPMS, et peut aussi bien fonctionner en mode d'écoute uniquement qu'en mode d'interrogation.

Que cela soit en mode d'écoute ou en mode d'interrogation, un système de lecture doit néanmoins disposer du bon protocole de communication, celui adapté au capteur TPMS considéré. La présente invention trouve, entre autre, pour application cette situation.

L'interrogation, c'est-à-dire l'envoi d'une demande de données de surveillance selon un protocole compatible, présente l'avantage de ne pas être tributaire des conditions d'émissions du capteur TPMS, et permet ainsi un gain de temps dans la réception des données de surveillance.

Il est à noter qu'un véhicule automobile peut comprendre entre 1 et une pluralité de capteurs TPMS, chacun associé à une roue du véhicule par exemple. Ainsi, la présente invention trouve pour application aussi bien la lecture de données d'un seul capteur TPMS comme d'une pluralité.

La présente invention concerne ainsi un banc de lecture apte à communiquer par ondes radio avec différents types de capteurs TPMS. De manière très avantageuse et comme il sera décrit ci-après, ce banc de lecture est configuré pour être adaptable électroniquement à tous type de capteurs TPMS, et selon un mode de réalisation particulier, ce banc de lecture est également adaptables mécaniquement à tous type de capteurs TPMS mais également de véhicules.

En effet, d'une part un capteur TPMS dispose d'un protocole de communication mais le montage du capteur TPMS sur le véhicule peut également être propre à une gamme de véhicule, par exemple, tout comme la voie ou l'empattement qui vont alors définir les distances relatives entre chaque pneu du véhicule.

En effet, selon certains constructeurs ou fabriquant, les capteurs TPMS peuvent être disposés à des positions différentes relativement aux roue, aux pneus ou encore au véhicule. Ainsi, le capteur TPMS peut être positionné à différents endroits relativement au véhicule, il peut par exemple être disposé au niveau de la roue, au niveau de l'essieu, sur ou dans le pneu, sur ou dans la jante, sur ou dans l'enjoliveur, et plus généralement à toute position lui permettant de procéder à une mesure directe et/ou indirecte de la pression du pneu considéré, et de sa température pour certains modèles de capteurs TPMS. La présente invention s'applique à tous type de capteurs TPMS et cela indépendamment de son mode de montage et/ou de sa position relativement à la roue, au pneu, à la jante, à l'enjoliveur ou encore au véhicule.

La présente invention propose ainsi un banc de lecture adaptable à une pluralité de protocoles de communication et cela de manière automatique, et optionnellement à au moins un paramètre de communication radio comme par exemple la puissance d'émission d'une unité de communication radio.

Et selon un mode de réalisation particulier, ce banc de lecture est également mécaniquement adaptable et cela de manière automatique à au moins un paramètre physique de communication.

Avantageusement les paramètres physiques de communication et les paramètres de communication radio sont regroupés sous le terme de paramètres de fonctionnement additionnels. Ainsi le banc de lecture, selon un mode de réalisation de la présente invention, est configuré pour s'adapter à une pluralité de protocoles de communication et de préférence à au moins un paramètre de fonctionnement additionnel.

Ces différents aspects vont maintenant être décrits en prenant comme support illustratif, d'un mode de réalisation particulier, la figure 1.

La figure 1 illustre un banc de lecture 100 configuré pour accueillir le véhicule 200 afin de réaliser un contrôle de la pression de ses pneus 220, par exemple.

Le banc de lecture 100 est ainsi configuré pour effectuer la lecture d'un paramètre des pneus 220 du véhicule 200 et cela de manière automatique.

Selon un mode de réalisation, le véhicule 200 est installé dans le banc de lecture 100 de sorte à permettre la lecture des données d'au moins un capteur TPMS 230 positionné sur chacune de ses roues 210 dans une zone de passage où le véhicule 200 est temporairement immobilisé.

Selon un autre mode de réalisation le véhicule 200 n'est pas à l'arrêt et il traverse simplement le banc de lecture 100. Lors de cette traversée les données des capteurs TPMS du véhicule 200 sont lues.

Le banc de lecture 100 comprend avantageusement au moins un module électronique 110 en communication filaire et/ou non filaire avec au moins une base de données 130 pouvant être unitaire ou non et locale ou bien déportée, avec au moins un capteur optique 120, et avec au moins une unité de communication radio 140 comportant au moins un dispositif antennaire 150. Avantageusement le dispositif antennaire 150 comprend au moins une antenne radio.

Selon un mode de réalisation, le module électronique 110 peut comprendre ou non une pluralité de sous-modules, certains pouvant être physiquement inclus dans le module électronique 110 et d'autres déportés. Le module électronique 110 est de préférence fixe relativement à la zone de passage du véhicule 200.

De manière avantageuse, avant ou pendant ou encore après l'installation du véhicule 200 dans le banc de lecture 100, ou lors de sa traversée de celui-ci, le capteur optique 120, de préférence une caméra numérique, capture une image du véhicule 200. Cette image du véhicule 200 est traitée de préférence numériquement par un module photographique.

Ce module photographique peut par exemple être compris dans le module électronique 110, ou bien il peut être déporté pour des questions de ressources système par exemple. De préférence, le capteur optique 120 est monté de manière fixe relativement à la zone de passage du véhicule 200. Il peut cibler une zone avant, ou arrière, du véhicule 200, de préférence centrée sur l'axe médian de la zone de passage et par exemple au moins plus large qu'une plaque d'immatriculation classique.

Avantageusement, ce module photographique est configuré pour extraire au moins une information propre à identifier des caractéristiques techniques du véhicule 200 et/ou un protocole de communication propre au véhicule 200 à partir d'une base de données 130. Cette base de données 130 peut en effet comprendre une pluralité de protocoles de communication et/ou une pluralité de données techniques relatives à une pluralité de véhicules.

A partir d'un élément identifiant du véhicule 200 ou de l'appartenance du véhicule 200 à une famille de véhicules, d'une même marque par exemple, la base de données 130 permet d'obtenir au moins une donnée technique relative au véhicule 200 identifié, et/ou le protocole de communication nécessaire pour la lecture du ou des capteurs de surveillance 230 dudit véhicule 200 identifié.

Selon un mode de réalisation, dans le cas où une donnée technique est retournée depuis la base de donnée 130, le module électronique 110 est configuré afin de déduire, sur la base de cette donnée technique, le protocole de communication applicable à la lecture des données du ou des capteurs de surveillance 230 du véhicule 200, et cela par exemple à partir d'une autre base de données, locale ou déportée.

Selon un mode de réalisation préféré, une photographie de la plaque d'immatriculation 240 du véhicule 200 est capturée par ladite caméra 120 et les numéros et lettres composant l'immatriculation du véhicule 200 sont utilisés comme référence dans ladite base de données 130. C'est par exemple le module photographique qui extrait à partir de l'image du numéro d'immatriculation inscrit sur la plaque d'immatriculation les numéro et lettres la composant.

De manière avantageuse, la caméra 120 peut capturer une image de préférence lisible et exploitable informatiquement, de la plaque d'immatriculation 240 du véhicule 200 à une distance d'au moins un mètre. Cela permet ainsi d'adapter le banc de lecture 100 audit véhicule 200 tandis que celui-ci est encore en mouvement.

De manière préférée, le capteur optique 120 est disposé à demeure relativement au banc de lecture permettant une capture automatique de la plaque d'immatriculation 240 du véhicule 200 par exemple.

Selon un mode de réalisation, le banc de lecture 100 peut comprendre deux capteurs optiques 120 pouvant être installés, de préférence à demeure, relativement au banc de lecture 100 de sorte à permettre une prise de photo de la plaque d'immatriculation 240 avant et arrière du véhicule 200. Cela permet, dans le cas où la plaque d'immatriculation 240 avant est sale ou peu lisible par exemple d'utiliser une photo de la plaque d'immatriculation 240 arrière, voire de combiner une photo de la plaque d'immatriculation 240 avant avec une photo de la plaque d'immatriculation 240 arrière pour obtenir une image de la plaque d'immatriculation 240 exploitable informatiquement.

Selon un mode de réalisation très astucieux, quand l'intégralité du numéro de la plaque d'immatriculation 240 n'est pas visible à partir d'une image seule ou en combinant les images de la plaque d'immatriculation 240 avant et de la plaque d'immatriculation 240 arrière du véhicule 200, la présente invention peut exploiter d'autres informations afin d'extrapoler ce numéro de plaque d'immatriculation 240.

Par exemple, si uniquement une partie de la plaque d'immatriculation 240 est exploitable informatiquement, alors la présente invention peut extrapoler le numéro de la plaque d'immatriculation 240 en croisant des données additionnelles comme par exemple la marque, le modèle, la couleur du véhicule 200 de sorte à restreindre le choix des véhicules 200 correspondant à cette fraction de numéro de la plaque d'immatriculation 240, voire à identifier le seul numéro de plaque d'immatriculation 240 correspondant au seul véhicule 200 regroupant cet ensemble de données. Avantageusement, ces données additionnelles peuvent être des paramètres physiques du véhicule 200.

En effet, selon un autre mode de réalisation compatible avec les précédents, la caméra 120 capture une photographie du véhicule 200 de sorte à extraire des paramètres physiques comme par exemple la forme de la carrosserie, la couleur, le symbole du constructeur ou encore la marque de celui-ci. Ces informations sont alors envoyées à ladite base de données 130 de sorte à identifier le modèle du véhicule 200.

Selon un autre mode de réalisation, c'est au niveau des pneus 220 qu'est prise au moins une photographie afin de déterminer leur modèle à partir de leur numéro de série par exemple ou de tous signes distinctifs, comme par exemple leur empreinte. En effet, d'une part le véhicule 200 ne dispose pas nécessairement des pneus conseillé pour ce type de véhicule par exemple, d'autre part, un véhicule peut disposer de différents pneus, par exemple des pneus d'un premier type à l'avant et des pneus d'un second type à l'arrière. La reconnaissance individuelle de chaque pneu est donc avantageuse.

Cette étape d'identification du modèle du véhicule 200 est essentielle afin de déterminer les paramètres de lecture du ou de ses capteurs TPMS 230. Ces paramètres de lecture peuvent comprendre une pluralité de paramètres qui peuvent être par exemple des paramètres liés à un protocole de communication avec les capteurs TPMS 230, ou encore à une donnée technique du véhicule 200.

Le protocole de communication concerne par exemple les paramètres électroniques de communication radio entre l'unité de communication radio 140 et les capteurs TPMS 230. Avantageusement, le protocole de communication peut comprendre les règles de communication radio ainsi que le langage utilisé et/ou encore le format des données communiquées.

La présente invention tire avantage de ce protocole de communication pour adapter électroniquement le banc de lecture 100 afin de satisfaire aux conditions nécessaires pour la lecture des données de surveillance des capteurs TPMS 230.

Selon un mode de réalisation préféré, le module électronique 110 est configuré pour déterminer au moins un paramètre de fonctionnement additionnel à partir du paramètre de lecture. Ce paramètre de fonctionnement additionnel peut, par exemple, être un paramètre physique de communication et/ou un paramètre de communication radio.

Les paramètres physiques de communication peuvent concerner des données relatives au positionnement des dispositifs antennaires 150 du banc de lecture 100 relativement à la position des capteurs TPMS 230. Cela signifie que ces paramètres physiques de communication peuvent comprendre l'empattement, la voie, l'entraxe, le positionnement des capteurs TPMS du véhicule 200 considéré. Sur la base de ces paramètres, la présente invention peut adapter le banc de lecture 100 et en particulier les dispositifs antennaires 150 afin de permettre la lecture des données de surveillance des capteurs TPMS 230.

Par exemple, dans le cas de la prise en compte de la voie du véhicule, des dispositifs antennaires 150 associés aux deux roues 210 avant du véhicule 200 par exemple peuvent voir leur distance relative l'un par rapport à l'autre être modifiée afin de satisfaire au paramètre physique de communication qu'est la voie du véhicule 200. Cette adaptation de cette distance entre deux dispositifs antennaires 150 opposés permet une meilleure gestion de la puissance d'émission et/ou de réception radio par exemple tout comme une meilleure discrimination des capteurs de surveillance 230 de chaque roue 210.

Avantageusement, la prise en compte des paramètres physiques de communication apporte une plus grande discrimination des différents capteurs de surveillance 230 et ainsi une plus grande assurance de savoir quelles données de surveillance sont associées à quel capteur de surveillance 230 par exemple.

Selon un mode de réalisation particulier, des systèmes de mesure peuvent être appliqués afin de déterminer au moins un paramètre physique de communication. Par exemple, un système de mesure laser peut être utilisé afin de déterminer la voie du véhicule 200 ou bien encore la position des pneus 220 relativement au banc de lecture 100.

Selon un autre exemple, les dispositifs antennaires 150 peuvent comprendre au moins un capteur de proximité configuré pour évaluer la distance séparant le dispositif antennaire 150 de la roue 210 du véhicule 200, et/ou configuré pour détecter une distance minimale préétablie entre la jante de la roue 210 et le dispositif antennaire 150 par exemple.

Selon encore un autre exemple, tout moyen de mesure d'une distance entre un dispositif antennaire 150 et une roue 210 ou un pneu 220 peut être utilisé afin de positionner au mieux les dispositifs antennaires 150 relativement au véhicule 200.

Les paramètres physiques de communication peuvent ainsi, selon un mode de réalisation bien particulier, être mesurés et/ou déduits à partir du véhicule 200 par une ou des mesures physiques directes et/ou indirectes.

Ces paramètres physiques de communication peuvent induire une réorganisation des dispositifs antennaires 150 du banc de lecture 100.

Selon un mode de réalisation la géométrie et/ou l'orientation des dispositifs antennaires 150 relativement aux roues 210 du véhicule 200 peuvent être adaptées sur la base par exemple des paramètres physiques de communication. Par exemple, les dispositifs antennaires 150 peuvent être verticaux comme illustré dans la figure 1 de sorte à venir au regard des jantes de chacune des roues 210 du véhicule 200.

Dans cette configuration, et selon un mode de réalisation, la distance entre une roue 210 et un dispositif antennaire vertical 150 peut être automatiquement ajustée afin de permettre, voire d'améliorer, la communication radio entre l'unité de communication radio 140 et le capteur TPMS 230 de la roue 210 considérée.

De même les distances séparant les dispositifs antennaires 150 les uns des autres peuvent être ajustées en fonction de l'empattement et de la voie du véhicule 200.

Selon un autre mode de réalisation, les dispositifs antennaires 150 peuvent être horizontaux et logés dans le sol de sorte que les roues 210 du véhicule 200 soient positionnées au-dessus de chacun des dispositifs antennaires 150.

Dans cette configuration, il est également possible de prévoir une mobilité dans le plan ou dans l'espace des dispositifs antennaires horizontaux de sorte à les approcher ou les éloigner des roues 210 du véhicule 200, tout comme de sorte à les faire translater dans un plan horizontal afin de satisfaire à l'empattement et à la voie du véhicule 200.

Selon un autre mode de réalisation, les dispositifs antennaires 150 peuvent comprendre chacun au moins une première antenne radio verticale et au moins une deuxième antenne radio horizontale. Ainsi, selon ce mode de réalisation, un dispositif antennaire 150 comprend deux antennes associées à une même roue 210. Cela permet ainsi de disposer d'un seul banc de lecture 100 apte à la lecture de données de capteurs TPMS 230 nécessitant soit l'une et/ou l'autre des orientations des dispositifs antennaires 150 pour communiquer.

Dans cette configuration, il est également possible de disposer de la même mobilité que les exemples précédents pour l'ajustement de la position de chaque antenne radio de chaque dispositif antennaire 150 relativement à chaque roue 210 du véhicule 200.

Selon un autre mode de réalisation, le banc de lecture 100 ne comprend qu'un seul dispositif antennaire 150 mobile, en rotation par exemple et qui peut être situé en dessous du véhicule 200 de sorte à balayer chaque roue 210 l'une après l'autre afin de lire les données de surveillance de chacun des capteurs TPMS 230 du véhicule 200, et cela à partir d'un seul et unique dispositif antennaire 150.

Selon encore un autre mode de réalisation, les dispositifs antennaires 150 sont mobiles de sorte à être automatiquement déplacés par le module électronique 110 en fonction d'au moins l'un parmi les paramètres de lecture et/ou les paramètres de fonctionnement additionnels de sorte à venir au plus près des capteurs de surveillance 230 et d'optimiser le couplage électromagnétique entre lesdits dispositifs antennaires 150 et lesdits capteurs TPMS 230 du véhicule 200.

Avantageusement, les dispositifs antennaires 150 sont mobiles selon au moins l'une des trois directions de l'espace que cela soit en translation et/ou en rotation afin d'adapter le banc de lecture 100 au véhicule 200 mais également aux capteurs TPMS 230.

Ainsi, l'étape d'identification des spécificités du véhicule 200, c'est-à-dire des paramètres de lecture de ses capteurs TPMS 230 et de préférence de paramètres de fonctionnement additionnels, est une étape permettant l'adaptation aussi bien électronique que mécanique du banc de lecture 100 de la présente invention.

Selon un mode de réalisation, les paramètres de communication radio peuvent concerner la fréquence de communication utilisée par le ou les capteurs de surveillance 230 par exemple non limitatif ou encore la puissance nécessaire pour la lecture des données des capteurs de surveillance 230. Ces paramètres de communication radio sont avantageusement utilisés pour adapter le banc de lecture 100, et principalement l'unité de communication radio 140 à la lecture des données des capteurs de surveillance 230.

Ainsi, selon un mode de réalisation, le banc de lecture 100 peut adapter la puissance des émissions radio de l'unité de communication radio 140 en fonction du ou des capteurs de surveillance 230 considérés.

Concernant les données techniques du véhicule, il peut s'agir de données relatives à sa carrosserie, sa marque, son modèle, sa version, sa cylindrée, sa puissance chevaux, son énergie, son année, la pression préconisée des pneus (220), etc...

Ainsi, selon un mode de réalisation particulier, la puissance d'émission de l'unité de communication radio 140 peut être adaptée en fonction par exemple du diamètre des pneus 220, de leur épaisseur ou du positionnement des capteurs de surveillance 230 relativement au véhicule et/ou au dispositif antennaire 150. En effet, en fonction de ces divers paramètres, et d'autres par exemple, la puissance d'émission de l'unité de communication radio 140 nécessaire pour communiquer avec le capteur de surveillance 230 peut varier.

La présente invention permet ainsi, en adaptant cette puissance d'émission, d'éviter que celle-ci soit réglée constamment au maximum occasionnant une pollution électromagnétique non souhaitée et une consommation énergétique importante et inutile.

Ces données techniques peuvent également être exploitées afin d'adapter le banc de lecture 100 au type de véhicule 200 et/ou capteur TPMS 230 considéré. Par exemple, ces données peuvent permettre de déterminer le protocole de communication ou encore les paramètres de fonctionnement additionnels.

Selon un mode de réalisation, la base de données 130 comprend une pluralité de protocoles de communication, et/ou au moins une information qui permet de déduire le protocole de communication nécessaire à la lecture du ou des capteurs de surveillance 230. Ainsi, la base de données 130 fournit au banc de lecture 100 au moins une information permettant audit banc de lecture 100 de disposer du protocole de communication associé aux capteurs de surveillance 230 du véhicule 200 considéré.

Selon un mode de réalisation, ladite base de données 130 n'est pas unitaire et comprend au moins une première base de données et avec au moins une deuxième base de données, chacune pouvant être locale ou bien déportée. Selon ce mode de réalisation, la première base de données comprend des données relatives à l'identification du véhicule 200 à partir de l'information extraite par le module photographique, et la deuxième base de données comprend des données relatives au protocole de communication propre au véhicule 200 à partir des données relatives à l'identification du véhicule 200 fournies par la première base de données. Selon un mode de réalisation c'est alors la deuxième base de données qui transmet, par exemple au module électronique 110 ou plus généralement à un élément du banc de lecture 100, le protocole de communication adapté au véhicule 200, et plus précisément au capteur de surveillance 230. Selon un autre mode de réalisation, la deuxième base de données transmet le protocole de communication adapté au véhicule 200, et plus précisément au capteur de surveillance 230 à la première base de données, transmettant ensuite ledit protocole de communication au banc de lecture 100.

Avant, après ou pendant la détermination des paramètres de lecture, et selon un mode de réalisation, le véhicule 200 est installé de sorte à ce que ses roues 210 soient positionnées à portée de communication radio avec les dispositifs antennaires 150 disposés au niveau du banc de lecture 100. Ces dispositifs antennaires 150 peuvent être par exemple non limitatif au nombre de deux ou de quatre par exemple :
- Au nombre de deux, les données des deux capteurs TPMS 230 des deux roues 210 avant peuvent être lues avant de lire les données des deux capteurs TPMS 230 des roues 210 arrière, ou bien inversement.
- Au nombre de quatre, les données des quatre capteurs TPMS 230 de chacune des roues 210 du véhicule 200 sont lues simultanément.

Une fois les capteurs TPMS 230 et les dispositifs antennaires 150 correctement positionnés les uns par rapport aux autres et que l'unité de communication radio 140 a reçu depuis le module électronique 110 le protocole de communication et au besoin les paramètres de communication radio nécessaires, l'unité de communication radio 140 est alors apte à communiquer de manière compatible avec les capteurs TPMS 230.

Selon un mode de réalisation, l'unité de communication radio 140 est en mode d'écoute des capteurs TPMS 230, et attend que les capteurs TPMS 230 émettent les données de surveillance.

Selon un mode de réalisation, l'unité de communication radio 140 envoie audits capteurs TPMS 230 une demande de données de surveillance depuis les dispositifs antennaires 150.

A la réception de cette demande, les capteurs TPMS 230 émettent des données de surveillance comme par exemple, la pression des pneus 220, leur température ou encore le niveau de leur batterie d'alimentation électrique.

Ce mode de réalisation permet un gain de temps important dans l'obtention des données de surveillance. Lorsque les capteurs TPMS 230 disposent d'un mode de mise en veille, la demande de données de surveillance émise par l'unité de communication radio 140 à destination des capteurs 230 entraine leur sortie de ce mode de mise en veille et l'émission des données de surveillance.

A la réception de ces données de surveillance par l'unité de communication radio 140 par l'intermédiaire des dispositifs antennaires 150, ces données de surveillance sont transmises au module électronique 110.

Ce module électronique 110 transmet alors ces données de surveillance à un dispositif d'affichage 700 par exemple, comme un écran afin que le conducteur ou le technicien, par exemple, puisse voir ces données et décider ensuite de la maintenance nécessaire à effectuer sur le véhicule 200.

Le module électronique 110 peut également transmettre ces données directement ou indirectement par l'intermédiaire d'un serveur informatique 600 à divers dispositifs d'affichage 700, de contrôle 300, 400 ou de communication 500, par exemple il est possible qu'un message soit transmis à l'utilisateur sur son téléphone portable 500.

Ainsi lorsqu'un véhicule 200, une voiture par exemple, pénètre dans le banc de lecture 100, une image de celle-ci est prise et son modèle est déterminé automatiquement, ainsi que les paramètres de lecture dont le protocole de communication radio de ses capteurs TPMS 230 et les paramètres physiques de communication.

Puis, selon un mode de réalisation, les dispositifs antennaires 150 du banc de lectures 100 sont adaptés géométriquement et/ou spatialement afin de satisfaire au moins aux paramètres de lecture et/ou aux paramètres de fonctionnement additionnels.

Préférentiellement mais non limitativement, une demande de données de surveillance peut alors être générée par l'unité de communication radio 140 sur la base des paramètres radio du protocole de communication radio, et les capteurs TPMS 230 y répondent en transmettant leurs données de surveillance.

Selon un autre mode de réalisation, l'unité de communication radio 140 est simplement à l'écoute des capteurs TPMS 230 et attend l'émission des données de surveillance.

Les données de surveillance sont alors traitées à divers niveaux de l'architecture informatique du banc de lecture 100. Ces données sont affichées sur un écran 700 à destination du conducteur, par exemple. Elles sont transmises également à un service de facturation, par exemple afin de préparer un devis ou une facture pour les actes de maintenance requis par l'état des pneus 220 du véhicule 200 et particulièrement par l'état de la batterie du capteur par exemple, de la température et de la pression du pneu.

De manière avantageuse, ces informations peuvent être transmises sur un serveur informatique 600 afin de réaliser des statistiques ou un suivi de l'usure des pneus 220, de leur état, de leurs température, pression, mais également par exemple du niveau de batterie des capteurs TPMS 230 relativement à un utilisateur particulier et/ou un constructeur et/ou un fabricant.

De même dans le cas où le banc de lecture 100 est configuré pour un véhicule 200 en mouvement, c'est-à-dire dans le cas où le véhicule 200 ne s'arrête pas au banc de lecture 100 mais ne fait que le traverser, il est possible qu'un message soit transmis à l'utilisateur sur son téléphone portable 500 par exemple ou au travers de tous type de système de communication afin de l'informer sur l'état de ses pneus 220 et particulièrement sur l'état de la batterie du capteur par exemple, de la température et de la pression du pneu.

La présente invention peut particulièrement être utilisée au niveau de l'entrée d'un atelier de réparation automobile pour contrôler la pression des pneus et vérifier l'état de la batterie de chaque capteur TPMS, ou dans le cadre d'une société de location de voiture, ou encore à l'entrée des stations-services, ou encore à des péages, afin de recommander ou non au conducteur la maintenance de ses pneus (réglage de la pression, changement du capteur TPMS par exemple).

Avantageusement, la présente invention permet la lecture de capteurs de surveillance même lorsque le véhicule comprend des capteurs de surveillance différents les uns par rapport aux autres. Par exemple, dans le cas d'un véhicule comportant un premier type de capteur de surveillance au niveau de ses roues avant et un deuxième type de capteurs de surveillance au niveau de ses roues arrière, la présente invention permet de manière automatique la lecture des données de chacun des capteurs de surveillance et cela de manière indépendante entre chaque roue. Ce cas de figure trouve comme support par exemple le cas d'un véhicule où un garage aurait remplacé un capteur d'origine par un capteur universel et programmable sur une seule ou plusieurs des roues, sans avoir modifié les quatre roues, ou encore le cas d'une voiture de sport où les roues avant et arrière sont généralement de types, voire de modèles, différents et peuvent ainsi présenter parfois des capteurs TPMS différents.

Selon un mode de réalisation préféré, le module électronique 110 comprend au moins un processeur, de préférence au moins un microprocesseur, au moins un module de communication connecté à au moins un réseau de communication, au moins une unité de mémoire non transitoire comprenant au moins un programme d'ordinateur. Ledit au moins un programme d'ordinateur est configuré pour être exécuté par ledit au moins un processeur afin de mettre en œuvre au moins un procédé de lecture d'une donnée de surveillance du véhicule 200, ledit procédé de lecture comprenant au moins les étapes suivantes :
▪ recevoir par le module électronique 110 depuis le capteur optique 120 ladite une image ;
▪ extraire de ladite image une information d'identification du véhicule 200 ;
▪ transmettre depuis le module électronique 110 une requête en obtention d'un paramètre de lecture avec l'information d'identification à la base de données 130 ;
▪ recevoir par le module électronique 110 depuis la base de données 130 un paramètre de lecture relatif au véhicule 200 identifié par la base de données 130 en réponse à la requête ;
▪ sélectionner un protocole de communication radio compatible avec au moins un capteur de surveillance 230 en fonction du paramètre de lecture ;
▪ déterminer au moins un paramètre de fonctionnement additionnel à partir dudit au moins un paramètre de lecture, ledit au moins un paramètre de fonctionnement additionnel comprenant au moins un paramètre de communication radio comprenant au moins une puissance d'émission ;
▪ transmettre depuis le module électronique 110 au moins le protocole de communication vers l'unité de communication radio 140 de sorte à ce que l'unité de communication radio 140 soit apte à communiquer de manière compatible avec le capteur de surveillance 230 par l'intermédiaire du dispositif antennaire 150 ;
▪ de préférence, transmettre depuis le module électronique 110 au moins le paramètre de fonctionnement additionnel vers l'unité de communication radio 140 ;
▪ configurer ladite au moins une unité de communication radio (140) pour adapter la puissance d'émission radio lorsque ladite unité de communication radio (140) envoie au moins une demande de ladite au moins une donnée de surveillance audit moins un capteur de surveillance (230) par l'intermédiaire dudit au moins un dispositif antennaire (150) ;
▪ recevoir par le module électronique 110 depuis l'unité de communication radio 140 une donnée de surveillance envoyée par le capteur de surveillance 230 et reçue par le dispositif antennaire 150.

L'invention n'est pas limitée aux modes de réalisations précédemment décrits et s'étend à tous les modes de réalisation couverts par les revendications.

### REFERENCES

- 100.: Banc de lecture
- 110.: Module électronique
- 120.: Capteur optique
- 130.: Base(s) de données
- 140.: Unité de communication radio
- 150.: Dispositif(s) antennaire(s)

- 200.: Véhicule ;
- 210.: Roue(s) ;
- 220.: Pneu(s) ;
- 230.: Capteur(s) de surveillance ;
- 240.: Plaque d'immatriculation ;

- 300.: Ordinateur de maintenance ;

- 400.: Dispositif de contrôle ;

- 500.: Dispositif de communication ;

- 600.: Serveur informatique ;

- 700.: Dispositif d'affichage ;

## Revendications

1. Banc de lecture (100) d'au moins une donnée de surveillance configuré pour accueillir au moins un véhicule (200) comportant au moins une roue (210) comprenant au moins un pneu (220) et au moins un capteur de surveillance (230) étant configuré pour transmettre ladite au moins une donnée de surveillance par ondes radio, ledit banc de lecture (100) comprenant :
∘ au moins un capteur optique (120) configuré pour acquérir au moins une image d'au moins une partie dudit au moins un véhicule (200), ledit au moins un capteur optique (120) étant une caméra optique et ladite au moins une image d'au moins une partie dudit au moins un véhicule (200) est une image comprenant au moins un numéro d'immatriculation dudit au moins un véhicule (200) ;
∘ au moins une unité de communication radio (140) comportant au moins un dispositif antennaire (150) apte à communiquer avec ledit au moins un capteur de surveillance (230) ;
∘ au moins un module électronique (110) en communication avec au moins une base de données (130), avec ledit au moins un capteur optique (120), et avec ladite au moins une unité de communication radio (140) ;
et ledit au moins un module électronique (110) étant configuré pour :
▪ recevoir dudit au moins un capteur optique (120) au moins ladite au moins une image ;
▪ extraire de ladite au moins une image au moins une information d'identification dudit au moins un véhicule (200) ;
▪ transmettre au moins une requête en obtention d'au moins un paramètre de lecture avec ladite au moins une information d'identification à ladite au moins une base de données (130) ;
▪ recevoir de ladite au moins une base de données (130) au moins un paramètre de lecture relatif audit au moins un véhicule (200) identifié par ladite au moins une base de données (130) en réponse à ladite au moins une requête ;
▪ sélectionner un protocole de communication radio compatible avec ledit au moins un capteur de surveillance (230) en fonction au moins dudit au moins un paramètre de lecture ;
▪ déterminer au moins un paramètre de fonctionnement additionnel à partir dudit au moins un paramètre de lecture, ledit au moins un paramètre de fonctionnement additionnel comprenant au moins un paramètre de communication radio comprenant au moins une puissance d'émission ;
▪ transmettre ledit au moins un protocole de communication radio à ladite au moins une unité de communication radio (140) de sorte à ce que ladite au moins une unité de communication radio (140) soit apte à communiquer de manière compatible avec ledit au moins un capteur de surveillance (230) par l'intermédiaire dudit au moins un dispositif antennaire (150), ladite au moins une unité de communication radio (140) étant configurée pour adapter la puissance d'émission radio lorsque ladite unité de communication radio (140) envoie au moins une demande de ladite au moins une donnée de surveillance audit moins un capteur de surveillance (230) par l'intermédiaire dudit au moins un dispositif antennaire (150) ;
▪ recevoir depuis ladite au moins une unité de communication radio (140) au moins une donnée de surveillance envoyée depuis ledit au moins un capteur de surveillance (230) et reçue par ledit au moins un dispositif antennaire (150).

2. Banc de lecture (100) selon la revendication précédente dans lequel ledit au moins un paramètre de communication radio comprend au moins l'un parmi : une fréquence, une modulation.

3. Banc de lecture (100) selon l'une quelconque des revendications précédentes dans lequel ledit au moins un paramètre de lecture comprend au moins l'un parmi : au moins un protocole de communication, au moins une donnée technique relative audit au moins un véhicule (200).

4. Banc de lecture (100) selon l'une quelconque des revendications précédentes dans lequel ledit au moins un protocole de communication comprend au moins un paramètre pris parmi au moins : une règle de communication, un ordonnancement des flux de données, un format de données, une clef de cryptage, un langage de communication.

5. Banc de lecture (100) selon l'une quelconque des revendications précédentes dans lequel ledit au moins un paramètre de fonctionnement additionnel comprend au moins un paramètre physique de communication.

6. Banc de lecture (100) selon la revendication précédente dans lequel ledit au moins un paramètre physique de communication comprend au moins un paramètre pris parmi au moins : une distance relative et/ou une position relative entre ledit au moins un dispositif antennaire (150) et ledit au moins un capteur de surveillance (230), une orientation dudit au moins un dispositif antennaire (150) relativement audit au moins un pneu (220), un positionnement dudit au moins un capteur de surveillance (230) relativement audit au moins un pneu (220), la voie dudit au moins un véhicule (200), l'empattement dudit au moins un véhicule (200).

7. Banc de lecture (100) selon l'une quelconque des revendications précédentes configuré pour permettre la communication radio entre ladite au moins une unité de communication radio (140) et au moins deux capteurs de surveillance (230) associés à deux roues (210) distinctes dudit au moins un véhicule (200), avantageusement au moins quatre capteurs de surveillance (230) associés à quatre roues (210) distinctes dudit au moins un véhicule (200).

8. Banc de lecture (100) selon l'une quelconque des revendications précédentes dans lequel ledit au moins un banc de lecture (100) comprend de préférence au moins deux dispositifs antennaires (150) et avantageusement au moins quatre dispositifs antennaires (150), et dans lequel chaque dispositifs antennaires (150) est disposé selon un plan vertical et/ou horizontal, et est configuré pour communiquer avec au moins un capteur de surveillance (230) différent.

9. Banc de lecture (100) selon l'une quelconque des revendications précédentes dans lequel ledit au moins dispositif antennaire (150) comprend au moins une antenne radio.

10. Banc de lecture (100) selon l'une quelconque des revendications précédentes dans lequel ledit au moins dispositif antennaire (150) comprend au moins une première antenne radio et au moins une deuxième antenne radio pour chaque roue (210) dudit au moins un véhicule (200) et dans lequel ladite première antenne radio est disposée selon un plan vertical et ladite au moins une deuxième antenne radio est disposée selon un plan horizontal.

11. Banc de lecture (100) selon l'une quelconque des revendications précédentes dans lequel ledit au moins une module électronique (110) comprend un module photographique configuré pour extraire ledit au moins un numéro d'immatriculation à partir de ladite au moins une image.

12. Banc de lecture (100) selon l'une quelconque des revendications précédentes comprenant au moins un premier capteur optique et au moins un deuxième capteur optique, ledit au moins un premier capteur optique étant configuré pour acquérir au moins une image d'au moins une partie avant dudit au moins un véhicule (200), ledit au moins un deuxième capteur optique étant configuré pour acquérir au moins une image d'au moins une partie arrière dudit au moins un véhicule (200), ledit au moins un premier capteur optique étant une caméra optique et ladite au moins une image d'au moins une partie avant dudit au moins un véhicule (200) étant une image comprenant au moins un numéro d'immatriculation dudit au moins un véhicule (200), ledit au moins un deuxième capteur optique étant une caméra optique et ladite au moins une image d'au moins une partie arrière dudit au moins un véhicule (200) étant une image comprenant au moins un numéro d'immatriculation dudit au moins un véhicule (200).

13. Banc de lecture (100) selon la revendication précédente dans lequel ledit au moins une module électronique (110) comprend un module photographique configuré pour extraire ledit au moins un numéro d'immatriculation à partir d'une combinaison de ladite au moins une image d'au moins une partie avant dudit au moins un véhicule (200) et ladite au moins une image d'au moins une partie arrière dudit au moins un véhicule (200).

14. Système de lecture d'au moins une donnée de surveillance comprenant au moins un véhicule (200) comportant au moins une roue (210) comprenant au moins un pneu (220) et au moins un capteur de surveillance (230), ledit capteur de surveillance (230) étant configuré pour transmettre ladite au moins une donnée de surveillance par ondes radio, ledit système comprenant au moins un banc de lecture (100) de ladite au moins une donnée de surveillance selon l'une quelconque des revendications précédentes.

15. Système selon la revendication précédente dans lequel ledit au moins un capteur de surveillance (230) comprend au moins une source d'alimentation électrique, et est configuré pour mesurer au moins une donnée de surveillance prise parmi au moins : pression pneumatique dudit au moins un pneu (220), température dudit au moins un pneu (220), niveau de charge électrique de ladite au moins une source d'alimentation électrique.

16. Procédé de lecture d'au moins une donnée de surveillance d'au moins un véhicule (200) comportant au moins une roue (210) comprenant au moins un pneu (220) et au moins un capteur de surveillance (230) étant configuré pour transmettre ladite au moins une donnée de surveillance par ondes radio, ladite lecture étant réalisée depuis au moins un banc de lecture (100) selon l'une quelconque des revendications 1 à 13, ledit au moins un banc de lecture (100) étant configuré pour accueillir ledit au moins un véhicule (200) et comprenant :
∘ au moins un capteur optique (120) configuré pour acquérir au moins une image d'au moins une partie dudit au moins un véhicule (200), ledit au moins un capteur optique (120) étant une caméra optique et ladite au moins une image d'au moins une partie dudit au moins un véhicule (200) est une image comprenant au moins un numéro d'immatriculation dudit au moins un véhicule (200) ;
∘ au moins une unité de communication radio (140) comportant au moins un dispositif antennaire (150) apte à communiquer avec ledit au moins un capteur de surveillance (230) ;
∘ au moins un module électronique (110) en communication avec au moins une base de données (130), avec ledit au moins un capteur optique (120), et avec ladite au moins une unité de communication radio (140) ;
ledit procédé de lecture comprenant au moins les étapes suivantes :
▪ recevoir par ledit au moins un module électronique (110) depuis ledit au moins un capteur optique (120) ladite au moins une image ;
▪ extraire de ladite au moins une image au moins une information d'identification dudit au moins un véhicule (200) ;
▪ transmettre depuis ledit au moins un module électronique (110) au moins une requête en obtention d'au moins un paramètre de lecture avec ladite au moins une information d'identification à ladite au moins une base de données (130) ;
▪ recevoir par ledit au moins un module électronique (110) depuis ladite au moins une base de données (130) au moins un paramètre de lecture relatif audit au moins un véhicule (200) identifié par ladite au moins une base de données (130) en réponse à ladite au moins une requête ;
▪ sélectionner un protocole de communication radio compatible avec ledit au moins un capteur de surveillance (230) en fonction au moins dudit au moins un paramètre de lecture ;
▪ déterminer au moins un paramètre de fonctionnement additionnel à partir dudit au moins un paramètre de lecture, ledit au moins un paramètre de fonctionnement additionnel comprenant au moins un paramètre de communication radio comprenant au moins une puissance d'émission ;
▪ transmettre depuis ledit au moins un module électronique (110) ledit au moins un protocole de communication vers ladite au moins une unité de communication radio (140) de sorte à ce que ladite au moins une unité de communication radio (140) soit apte à communiquer de manière compatible avec ledit au moins un capteur de surveillance (230) par l'intermédiaire dudit au moins un dispositif antennaire (150) ;
▪ configurer ladite au moins une unité de communication radio (140) pour adapter la puissance d'émission radio lorsque ladite unité de communication radio (140) envoie au moins une demande de ladite au moins une donnée de surveillance audit moins un capteur de surveillance (230) par l'intermédiaire dudit au moins un dispositif antennaire (150) ;
▪ recevoir par ledit au moins un module électronique (110) depuis ladite au moins une unité de communication radio (140) au moins une donnée de surveillance envoyée par ledit au moins un capteur de surveillance (230) et reçue par ledit au moins un dispositif antennaire (150).

## Patentansprüche

1. Bank zum Auslesen (100) von mindestens einem Überwachungsdatenelement, die dafür konfiguriert ist, mindestens ein Fahrzeug (200) aufzunehmen, das mindestens ein Rad (210) umfasst, welches mindestens einen Reifen (220) und mindestens einen Überwachungssensor (230) umfasst, der dafür konfiguriert ist, das mindestens eine Überwachungsdatenelement über Funkwellen zu übertragen, wobei die Auslesebank (100) umfasst:
∘ mindestens einen optischen Sensor (120), der dafür konfiguriert ist, mindestens ein Bild von mindestens einem Teil des mindestens einen Fahrzeugs (200) zu erfassen, wobei es sich bei dem mindestens einen optischen Sensor (120) um eine optische Kamera handelt, und es sich bei dem mindestens einen Bild von mindestens einem Teil des mindestens einen Fahrzeugs (200) um ein Bild handelt, das mindestens ein Nummernschild des mindestens einen Fahrzeugs (200) umfasst;
∘ mindestens eine Funkkommunikationseinheit (140), die mindestens eine Antennenvorrichtung (150) umfasst, welche in der Lage ist, mit dem mindestens einen Überwachungssensor (230) zu kommunizieren;
∘ mindestens ein Elektronikmodul (110), das mit mindestens einer Datenbank (130), mit dem mindestens einen optischen Sensor (120), und mit der mindestens einen Funkkommunikationseinheit (140) in Kommunikation steht;
und wobei das mindestens eine Elektronikmodul (110) dafür konfiguriert ist:
▪ von dem mindestens einen optischen Sensor (120) mindestens das mindestens eine Bild zu empfangen;
▪ aus dem mindestens einen Bild mindestens eine Information zum Identifizieren des mindestens einen Fahrzeugs (200) zu extrahieren;
▪ bei Erhalt von mindestens einem Ausleseparameter mit der mindestens einen Identifikationsinformation mindestens eine Abfrage an die mindestens eine Datenbank (130) zu übertragen;
▪ von der mindestens einen Datenbank (130) in Antwort auf die mindestens eine Abfrage mindestens einen Ausleseparameter zu empfangen, der sich auf das mindestens eine von der mindestens einen Datenbank (130) identifizierte Fahrzeug (200) bezieht;
▪ in Abhängigkeit von mindestens dem mindestens einen Ausleseparameter ein Funkkommunikationsprotokoll auszuwählen, das mit dem mindestens einen Überwachungssensor (230) kompatibel ist;
▪ auf Grundlage des mindestens einen Ausleseparameters mindestens einen zusätzlichen Betriebsparameter zu bestimmen, wobei der mindestens eine zusätzliche Betriebsparameter mindestens einen Funkkommunikationsparameter umfasst, der mindestens eine Sendeleistung umfasst;
▪ das mindestens eine Funkkommunikationsprotokoll an die mindestens eine Funkkommunikationseinheit (140) zu übertragen, sodass die mindestens eine Funkkommunikationseinheit (140) in der Lage ist, mittels der mindestens einen Antennenvorrichtung (150) in kompatibler Weise mit dem mindestens einen Überwachungssensor (230) zu kommunizieren, wobei die mindestens eine Funkkommunikationseinheit (140) dafür konfiguriert ist, die Funksendeleistung anzupassen, wenn die Funkkommunikationseinheit (140) mittels der mindestens einen Antennenvorrichtung (150) mindestens eine Anfrage des mindestens einen Überwachungsdatenelements an den mindestens einen Überwachungssensor (230) sendet;
▪ von der mindestens einen Funkkommunikationseinheit (140) mindestens ein Überwachungsdatenelement zu empfangen, das von dem mindestens einen Überwachungssensor (230) gesendet und von der mindestens einen Antennenvorrichtung (150) empfangen wird.

2. Auslesebank (100) nach dem vorstehenden Anspruch, wobei der mindestens eine Funkkommunikationsparameter mindestens eines umfasst aus: einer Frequenz, einer Modulation.

3. Auslesebank (100) nach einem der vorstehenden Ansprüche, wobei der mindestens eine Ausleseparameter mindestens eines umfasst aus: mindestens einem Kommunikationsprotokoll, mindestens einem technischen Datenelement, das sich auf das mindestens eine Fahrzeug (200) bezieht.

4. Auslesebank (100) nach einem der vorstehenden Ansprüche, wobei das mindestens eine Kommunikationsprotokoll mindestens einen Parameter umfasst, ausgewählt aus mindestens: einer Kommunikationsregel, einer Planung der Datenströme, einem Datenformat, einem Verschlüsselungsschlüssel, einer Kommunikationssprache.

5. Auslesebank (100) nach einem der vorstehenden Ansprüche, wobei der mindestens eine zusätzliche Betriebsparameter mindestens einen physikalischen Kommunikationsparameter umfasst.

6. Auslesebank (100) nach dem vorstehenden Anspruch, wobei der mindestens eine physikalische Kommunikationsparameter mindestens einen Parameter umfasst, ausgewählt aus mindestens: einem relativen Abstand und/oder einer relativen Position zwischen der mindestens einen Antennenvorrichtung (150) und dem mindestens einen Überwachungssensor (230), einer Ausrichtung der mindestens einen Antennenvorrichtung (150) in Bezug auf den mindestens einen Reifen (220), einer Positionierung des mindestens einen Überwachungssensors (230) in Bezug auf den mindestens einen Reifen (220), der Spur des mindestens einen Fahrzeugs (200), dem Randstand des mindestens einen Fahrzeugs (200).

7. Auslesebank (100) nach einem der vorstehenden Ansprüche, die dafür konfiguriert ist, die Funkkommunikation zwischen der mindestens einen Funkkommunikationseinheit (140) und mindestens zwei Überwachungssensoren (230), die mit zwei getrennten Rädern (210) des mindestens einen Fahrzeugs (200) verknüpft sind, vorteilhafterweise mindestens vier Überwachungssensoren (230), die mit vier getrennten Rädern (210) des mindestens einen Fahrzeugs (200) verknüpft sind, zu ermöglichen.

8. Auslesebank (100) nach einem der vorstehenden Ansprüche, wobei die mindestens eine Auslesebank (100) vorzugsweise mindestens zwei Antennenvorrichtungen (150), und vorteilhafterweise mindestens vier Antennenvorrichtungen (150) umfasst, und wobei jede Antennenvorrichtung (150) in einer vertikalen und/oder horizontalen Ebene angeordnet ist und dafür konfiguriert ist, mit mindestens einem unterschiedlichen Überwachungssensor (230) zu kommunizieren.

9. Auslesebank (100) nach einem der vorstehenden Ansprüche, wobei die mindestens eine Antennenvorrichtung (150) mindestens eine Funkantenne umfasst.

10. Auslesebank (100) nach einem der vorstehenden Ansprüche, wobei die mindestens eine Antennenvorrichtung (150) mindestens eine erste Funkantenne und mindestens eine zweite Funkantenne für jedes Rad (210) des mindestens einen Fahrzeugs (200) umfasst, und wobei die erste Funkantenne in einer vertikalen Ebene angeordnet ist, und die mindestens eine zweite Funkantenne in einer horizontalen Ebene angeordnet ist.

11. Auslesebank (100) nach einem der vorstehenden Ansprüche, wobei das mindestens eine Elektronikmodul (110) ein Fotomodul umfasst, das dafür konfiguriert ist, das mindestens eine Nummernschild auf Grundlage des mindestens einen Bildes zu extrahieren.

12. Auslesebank (100) nach einem der vorstehenden Ansprüche, die mindestens einen ersten optischen Sensor und mindestens einen zweiten optischen Sensor umfasst, wobei der mindestens eine erste optische Sensor dafür konfiguriert ist, mindestens ein Bild von mindestens einem vorderen Teil des mindestens einen Fahrzeugs (200) zu erfassen, wobei der mindestens eine zweite optische Sensor dafür konfiguriert ist, mindestens ein Bild von mindestens einem hinteren Teil des mindestens einen Fahrzeugs (200) zu erfassen, wobei es sich bei dem mindestens einen ersten optischen Sensor um eine optische Kamera handelt, und wobei es sich bei dem mindestens einen Bild von mindestens einem vorderen Teil des mindestens einen Fahrzeugs (200) um ein Bild handelt, das mindestens ein Nummernschild des mindestens einen Fahrzeugs (200) umfasst, wobei es sich bei dem mindestens einen zweiten optischen Sensor um eine optische Kamera handelt, und wobei es sich bei dem mindestens einen Bild von mindestens einem hinteren Teil des mindestens einen Fahrzeugs (200) um ein Bild handelt, das mindestens ein Nummernschild des mindestens einen Fahrzeugs (200) umfasst.

13. Auslesebank (100) nach dem vorstehenden Anspruch, wobei das mindestens eine Elektronikmodul (110) ein Fotomodul umfasst, das dafür konfiguriert ist, das mindestens eine Nummernschild auf Grundlage einer Kombination des mindestens einen Bildes von mindestens einem vorderen Teil des mindestens einen Fahrzeugs (200) und des mindestens einen Bildes von mindestens einem hinteren Teil des mindestens einen Fahrzeugs (200) zu extrahieren.

14. System zum Auslesen von mindestens einem Überwachungsdatenelement, das mindestens ein Fahrzeug (200) umfasst, welches mindestens ein Rad (210) umfasst, das mindestens einen Reifen (220) und mindestens einen Überwachungssensor (230) umfasst, wobei der Überwachungssensor (230) dafür konfiguriert ist, das mindestens eine Überwachungsdatenelement über Funkwellen zu übertragen, wobei das System mindestens eine Bank zum Auslesen (100) des mindestens einen Überwachungsdatenelements nach einem der vorstehenden Ansprüche umfasst.

15. System nach dem vorstehenden Anspruch, wobei der mindestens eine Überwachungssensor (230) mindestens eine Stromversorgungsquelle umfasst und dafür konfiguriert ist, mindestens ein Überwachungsdatenelement zu messen, ausgewählt aus mindestens: Reifendruck des mindestens einen Reifens (220), Temperatur des mindestens einen Reifens (220), Stromladezustand der mindestens einen Stromversorgungsquelle.

16. Verfahren zum Auslesen von mindestens einem Überwachungsdatenelement mindestens eines Fahrzeugs (200), das mindestens ein Rad (210) umfasst, welches mindestens einen Reifen (220) und mindestens einen Überwachungssensor (230) umfasst, der dafür konfiguriert ist, das mindestens eine Überwachungsdatenelement über Funkwellen zu übertragen, wobei das Auslesen von mindestens einer Auslesebank (100) nach einem der Ansprüche 1 bis 13 aus ausgeführt wird, wobei die mindestens eine Auslesebank (100) dafür konfiguriert ist, das mindestens eine Fahrzeug (200) aufzunehmen, und umfasst:
∘ mindestens einen optischen Sensor (120), der dafür konfiguriert ist, mindestens ein Bild von mindestens einem Teil des mindestens einen Fahrzeugs (200) zu erfassen, wobei es sich bei dem mindestens einen optischen Sensor (120) um eine optische Kamera handelt, und es sich bei dem mindestens einen Bild von mindestens einem Teil des mindestens einen Fahrzeugs (200) um ein Bild handelt, das mindestens ein Nummernschild des mindestens einen Fahrzeugs (200) umfasst;
∘ mindestens eine Funkkommunikationseinheit (140), die mindestens eine Antennenvorrichtung (150) umfasst, welche in der Lage ist, mit dem mindestens einen Überwachungssensor (230) zu kommunizieren;
∘ mindestens ein Elektronikmodul (110), das mit mindestens einer Datenbank (130), mit dem mindestens einen optischen Sensor (120), und mit der mindestens einen Funkkommunikationseinheit (140) in Kommunikation steht;
wobei das Ausleseverfahren mindestens die folgenden Schritte umfasst:
▪ Empfangen des mindestens einen Bildes durch das mindestens eine Elektronikmodul (110) von dem mindestens einen optischen Sensor (120);
▪ Extrahieren von mindestens einer Information zum Identifizieren des mindestens einen Fahrzeugs (200) aus dem mindestens einen Bild;
▪ Übertragen von mindestens einer Abfrage bei Erhalt von mindestens einem Ausleseparameter mit der mindestens einen Identifikationsinformation von dem mindestens einen Elektronikmodul (110) an die mindestens eine Datenbank (130);
▪ Empfangen von mindestens einem Ausleseparameter, der sich auf das mindestens eine von der mindestens einen Datenbank (130) identifizierte Fahrzeug (200) bezieht, durch das mindestens eine Elektronikmodul (110) von der mindestens einen Datenbank (130) in Antwort auf die mindestens eine Abfrage;
▪ Auswählen eines Funkkommunikationsprotokolls, das mit dem mindestens einen Überwachungssensor (230) kompatibel ist, in Abhängigkeit von mindestens dem mindestens einen Ausleseparameter;
▪ Bestimmen von mindestens einem zusätzlichen Betriebsparameter auf Grundlage des mindestens einen Ausleseparameters, wobei der mindestens eine zusätzliche Betriebsparameter mindestens einen Funkkommunikationsparameter umfasst, der mindestens eine Sendeleistung umfasst;
▪ Übertragen des mindestens einen Kommunikationsprotokolls von dem mindestens einen Elektronikmodul (110) an die mindestens eine Funkkommunikationseinheit (140), sodass die mindestens eine Funkkommunikationseinheit (140) in der Lage ist, mittels der mindestens einen Antennenvorrichtung (150) in kompatibler Weise mit dem mindestens einen Überwachungssensor (230) zu kommunizieren;
▪ Konfigurieren der mindestens einen Funkkommunikationseinheit (140) dafür, die Funksendeleistung anzupassen, wenn die Funkkommunikationseinheit (140) mittels der mindestens einen Antennenvorrichtung (150) mindestens eine Anfrage des mindestens einen Überwachungsdatenelements an den mindestens einen Überwachungssensor (230) sendet;
▪ Empfangen von mindestens einem Überwachungsdatenelement, das von dem mindestens einen Überwachungssensor (230) gesendet und von der mindestens einen Antennenvorrichtung (150) empfangen wird, durch das mindestens eine Elektronikmodul (110) von der mindestens einen Funkkommunikationseinheit (140).

## Claims

1. Bench for reading (100) at least one item of surveillance data configured to receive at least one vehicle (200) comprising at least one wheel (210) comprising at least one tyre (220) and at least one surveillance sensor (230) being configured to transmit said at least one item of surveillance data by radio waves, said reading bench (100) comprising:
∘ at least one optical sensor (120) configured to acquire at least one image of at least one portion of said at least one vehicle (200), said at least one optical sensor (120) being an optical camera and said at least one image of at least one portion of said at least one vehicle (200) is an image comprising at least one registration number of said at least one vehicle (200);
∘ at least one radio communication unit (140) comprising at least one antenna device (150) capable of communicating with said at least one surveillance sensor (230);
∘ at least one electronic module (110) in communication with at least one database (130), with said at least one optical sensor (120), and with said at least one radio communication unit (140);
and said at least one electronic module (110) being configured to:
▪ receive from said at least one optical sensor (120), at least said at least one image;
▪ extract from said at least one image, at least one item of identification information of said at least one vehicle (200);
▪ transmit at least one request for obtaining at least one reading parameter with said at least one item of identification information to said at least one database (130);
▪ receive from said at least one database (130) at least one reading parameter relative to said at least one vehicle (200) identified by said at least one database (130) in response to said at least one request;
▪ select a radio communication protocol which is compatible with said at least one surveillance sensor (230) according to at least said at least one reading parameter;
▪ determine at least one additional operating parameter from said at least one reading parameter, said at least one additional operating parameter comprising at least one radio communication parameter comprising at least one emission power;
▪ transmit said at least one radio communication protocol to said at least one radio communication unit (140) such that said at least one radio communication unit (140) is capable of communicating compatibly with said at least one surveillance sensor (230) by way of said at least one antenna device (150), said at least one radio communication unit (140) being configured to adapt the radio emission power when said radio communication unit (140) sends at least one request from said at least one item of surveillance data to said at least one surveillance sensor (230) by way of said at least one antenna device (150);
▪ receive from said at least one radio communication unit (140) at least one item of surveillance data sent from said at least one surveillance sensor (230) and received by said at least one antenna device (150).

2. Reading bench (100) according to the preceding claim, wherein said at least one radio communication parameter comprises at least one from among: a frequency, a modulation.

3. Reading bench (100) according to any one of the preceding claims, wherein said at least one reading parameter comprises at least one from among: at least one communication protocol, at least one item of technical data relative to said at least one vehicle (200).

4. Reading bench (100) according to any one of the preceding claims, wherein said at least one communication protocol comprises at least one parameter taken from among at least: one communication rule, a sequencing of the dataflows, a data format, an encryption key, a communication language.

5. Reading bench (100) according to any one of the preceding claims, wherein said at least one additional operating parameter comprises at least one physical communication parameter.

6. Reading bench (100) according to the preceding claim, wherein at least one physical communication parameter comprises at least one parameter taken from among at least: one relative distance and/or one relative position between said at least one antenna device (150) and said at least one surveillance sensor (230), an orientation of said at least one antenna device (150) relative to said at least one tyre (220), a positioning of said at least one surveillance sensor (230) relative to said at least one tyre (220), the track of said at least one vehicle (200), the wheelbase of said at least one vehicle (200).

7. Reading bench (100) according to any one of the preceding claims, configured to make it possible for radio communication between said at least one radio communication unit (140) and at least two surveillance sensors (230) associated with two wheels (210) separate from said at least one vehicle (200), advantageously at least four surveillance sensors (230) associated with four wheels (210) separate from said at least one vehicle (200).

8. Reading bench (100) according to any one of the preceding claims, wherein said at least one reading bench (100) preferably comprises at least two antenna devices (150) and advantageously at least four antenna devices (150), and wherein each antenna device (150) is arranged along a vertical and/or horizontal plane, and is configured to communicate with at least one different surveillance sensor (230).

9. Reading bench (100) according to any one of the preceding claims, wherein said at least one antenna device (150) comprises at least one radio antenna.

10. Reading bench (100) according to any one of the preceding claims, wherein said at least one antenna device (150) comprises at least one first radio antenna and at least one second radio antenna for each wheel (210) of said at least one vehicle (200) and wherein said first radio antenna is arranged along a vertical plane and said at least one second radio antenna is arranged along a horizontal plane.

11. Reading bench (100) according to any one of the preceding claims, wherein said at least one electronic module (110) comprises a photographic module configure to extract said at least one registration number from said at least one image.

12. Reading bench (100) according to any one of the preceding claims, comprising at least one first optical sensor and at least one second optical sensor, said at least one first optical sensor being configured to acquire at least one image of at least one front portion of said at least one vehicle (200), said at least one second optical sensor being configured to acquire at least one image of at least one rear portion of said at least one vehicle (200), said at least one first optical sensor being an optical camera and said at least one image of at least one front portion of said at least one vehicle (200) being an image comprising at least one registration number of said at least one vehicle (200), said at least one second optical sensor being an optical camera and said at least one image of at least one rear portion of said at least one vehicle (200) being an image comprising at least one registration number of said at least one vehicle (200).

13. Reading bench (100) according to the preceding claim, wherein said at least one electronic module (110) comprises a photographic module configured to extract said at least one registration number from a combination of said at least one image of at least one front portion of said at least one vehicle (200) and said at least one image of at least one rear portion of said at least one vehicle (200).

14. Reading system of at least one item of surveillance data comprising at least one vehicle (200) comprising at least one wheel (210) comprising at least one tyre (220) and at least one surveillance sensor (230), said surveillance sensor (230) being configured to transmit said at least one item of surveillance data by radio waves, said system comprising at least one reading bench (100) of said at least one item of surveillance data according to any one of the preceding claims.

15. System according to the preceding claim, wherein said at least one surveillance sensor (230) comprises at least one electrical power source, and is configured to measure at least one item of surveillance data taken from among at least: tyre pressure of said at least one tyre (220), temperature of said at least one tyre (220), electrical charge level of said at least one electrical power source.

16. Method for reading at least one item of surveillance data of at least one vehicle (200) comprising at least one wheel (210) comprising at least one tyre (220) and at least one surveillance sensor (230) being configured to transmit said at least one item of surveillance data by radio waves, said reading being done from at least one reading bench (100) according to any one of claims 1 to 13, said at least one reading bench (100) being configured to receive said at least one vehicle (200) and comprising:
∘ at least one optical sensor (120) configured to acquire at least one image of at least one portion of said at least one vehicle (200), said at least one optical sensor (120) being an optical camera and said at least one image of at least one portion of said at least one vehicle (200) is an image comprising at least one registration number of said at least one vehicle (200);
∘ at least one radio communication unit (140) comprising at least one antenna device (150) capable of communicating with said at least one surveillance sensor (230);
∘ at least one electronic module (110) in communication with at least one database (130), with said at least one optical sensor (120), and with said at least one radio communication unit (140);
said reading method comprising at least the following steps:
▪ receive by said at least one electronic module (110) from said at least one optical sensor (120), said at least one image;
▪ extract from said at least one image, at least one item of identification information of said at least one vehicle (200);
▪ transmit from said at least one electronic module (110), at least one request for obtaining at least one reading parameter with said at least one item of identification information to said at least one database (130);
▪ receive by said at least one electronic module (110), from said at least one database (130) at least one reading parameter relative to said at least one vehicle (200) identified by said at least one database (130) in response to said at least one request;
▪ select a radio communication protocol which is compatible with said at least one surveillance sensor (230) according to at least one reading parameter;
▪ determine at least one additional operating parameter from said at least one reading parameter, said at least one additional operating parameter comprising at least one radio communication parameter comprising at least one emission power;
▪ transmit from said at least one electronic module (110), said at least one radio communication protocol to said at least one radio communication unit (140) such that said at least one radio communication unit (140) is capable of communicating compatibly with said at least one surveillance sensor (230) by way of said at least one antenna device (150),
▪ configure said at least one radio communication unit (140) being configured to adapt the radio emission power when said radio communication unit (140) sends at least one request from said at least one item of surveillance data to said at least one surveillance sensor (230) by way of said at least one antenna device (150);
▪ receive by said at least one electronic module (110) from said at least one radio communication unit (140) at least one item of surveillance data sent from said at least one surveillance sensor (230) and received by said at least one antenna device (150).
